# EUROPEAN PATENT SPECIFICATION

(11) **EP 3 940 024 B1**
(45) Date of publication and mention of the grant of the patent: **10.09.2025**
(21) Application number: 21165548.5
(22) Date of filing: 29.03.2021
(51) Int. Cl.: C08J 5/18, B32B 3/30, B32B 27/08, B32B 27/18, B32B 27/20, B32B 27/30, B32B 27/40, B32B 27/36, C08J 7/04

(54) **POLYESTER FILM FOR EMBOSSING AND METHOD FOR MANUFACTURING THE SAME**
POLYESTERFILM FÜR PRÄGUNG UND VERFAHREN ZUR HERSTELLUNG DAVON
FILM POLYESTER POUR GAUFRAGE ET SON PROCÉDÉ DE FABRICATION

(30) Priority: 15.07.2020 TW 109123798
(43) Date of publication of application: 19.01.2022
(73) Proprietor: NAN YA PLASTICS CORPORATION, Taipei (TW)
(72) Inventor: YANG, Wen-Cheng, Taipei (TW); LIAO, Te-Chao, Taipei (TW); HSIAO, Chia-Yen, Taipei (TW); HSIEH, Yu-Chi, Taipei (TW)
(74) Representative: Viering, Jentschura & Partner mbB Patent- und Rechtsanwälte

(56) References cited:
- EP-A1- 2 258 550
- US-A1- 2019 126 599
- DATABASE WPI Week 201317, Derwent World Patents Index; AN 2013-C68221, XP002803959
- DATABASE WPI Week 199644, Derwent World Patents Index; AN 1996-439656, XP002803960
- DATABASE WPI Week 200830, Derwent World Patents Index; AN 2008-E42490, XP002803961

## Description

This application claims the benefit of priority to Taiwan Patent Application No. 109123798, filed on July 15, 2020.

### FIELD OF THE DISCLOSURE

The present disclosure relates to a polyester film for embossing and a method for manufacturing the same, and more particularly to a polyester film for embossing that is made from a recycled polyester material and a method for manufacturing the same.

### BACKGROUND OF THE DISCLOSURE

In recent years, usage of plastics has increased significantly, and as a result, a large amount of plastic waste is produced. Since the plastics are not easily degraded, recycling of the plastics and how to process the plastics after recycling have become particularly important issues.

Polyethylene terephthalate (PET) makes up a major portion of recycled plastics, and recycled PET plastics takes up about 52.4% of a total amount of the recycled plastics. In order to deal with such a large amount of recycled PET plastics, researchers in relevant field have to dedicate themselves to developing a method for processing the recycled PET plastics.

Out of the current techniques, the most common method to regenerate PET is through a physical (mechanical) manner. The recycled PET plastics that have been washed clean are firstly shredded to pieces and melted under high temperature, and then are extruded by an extruder to produce regenerated PET chips (also called as r-PET).

To address environmental concerns and to ensure that PET products contain more eco-friendly regenerated PET chips, a large amount of high-quality recycled PET chips is required. In the current industry, the PET recycling is mostly carried out by way of physical recycling. However, functional components (such as a slipping agent and an electrostatic pinning additive) are not allowed to be added, during a manufacturing process, to recycle chips that are produced through physical recycling. Therefore, it is necessary to use additional virgin (not regenerated) PET chips for additionally adding the above-mentioned functional components.

However, after adding the virgin polyester chips, a usage rate of the regenerated PET chips contained in the PET products will decrease. That is to say, in the current techniques, it is not possible to fully utilize the regenerated PET chips to manufacture new PET products. If the usage rate of the regenerated PET chips is too low, it may not be possible to satisfy a standard set up by environmental regulations such that an eco-label can be obtained. Moreover, as virgin PET chips that are newly used in the process of manufacturing the PET products would subsequently become the regenerated PET plastics that require processing, a problem of recycling and reusing would still arise.

US2019/0126599A1 relates to a thermoplastic film includes a core layer formed from a recycled polyethylene terephthatlate (PET) based resin. The thermoplastic film includes 90% to about 100% of the recycled polyethylene terephthatlate (PET) based resin.

EP2258550A1 relates to a polyester film. The polyester film includes at least one polyester layer containing a phosphorus-based antioxidant.

JP2013039764A relates to a laminated polyester film. The laminated polyester film includes a polyester layer (A) without a lubricating agent, a polyester layer containing a lubricating agent, and an application layer (C) consisting of acrylic resin.

JPH08217893A relates to films composed of at least a layer containing recycled polyester. The films contain specified antioxidants to prevent the discolouration of the recycled materials.

KR20070101593A relates to a multi-layer polyester film for embossing. The multi-layer polyester film includes a crosslinked or cured coating layer to ensure a good embossing performance by using a copolymer polyester film layer having a low glass transition temperature.

### SUMMARY OF THE DISCLOSURE

In response to the above-referenced technical inadequacies, the present disclosure provides a polyester film for embossing and a method for manufacturing the same according to independent claims 1 and 6.

The dependent claims show further embodiments of claims 1 and 6.

In one aspect, the present disclosure provides a polyester film for embossing. The polyester film for embossing is formed from a recycled polyester material. The polyester film for embossing includes a base layer and a surface coating layer. The base layer is formed from a polyester composition having a main component of regenerated polyethylene terephthalate and without not regenerated polyester chips. The polyester composition includes a physically regenerated polyester resin and a chemically regenerated polyester resin. A main component of each of the physically regenerated polyester resin and the chemically regenerated polyester resin is regenerated polyethylene terephthalate. The physically regenerated polyester resin is formed from cutting, melting, extruding by a single-screw or twin-screw extruder, and granulating the recycled polyester material. The chemically regenerated polyester resin is formed from cutting, depolymerizing to form an oligomer mixture, isolating and purifying the oligomer mixture, repolymerizing the oligomer mixture, and granulating the recycled polyester material. Based on a total weight of the polyester composition being 100 wt%, a total content of the physically regenerated polyester resin and the chemically regenerated polyester resin ranges from 50 wt% to 100 wt%; wherein, based on a total weight of the polyester composition being 100 wt%, a content of the physically regenerated polyester resin ranges from 50 wt% to 95 wt%, and a content of the chemically regenerated polyester resin ranges from 1 wt% to 40 wt%; wherein the chemically regenerated polyester resin is formed from chemically regenerated polyester chips and chemically regenerated regular polyester chips; wherein the chemically regenerated regular polyester chips are polyester chips prepared by direct repolymerization, reproduction process and no functional additive being added during the chemical reproduction process. The chemically regenerated polyester chips include chemically regenerated electrostatic pinning polyester chips. The chemically regenerated electrostatic pinning polyester chips are polyester chips prepared by having electrostatic pinning additives being added into the oligomer mixture and then repolymerized. The physically regenerated polyester resin is formed from physically regenerated polyester chips, and the physically regenerated polyester chips include physically regenerated regular polyester chips. The physically regenerated regular polyester chips are polyester chips prepared through the physical reproduction process, and no functional additive is added during the physical reproduction process. The surface coating layer is disposed on at least one surface of the base layer. A material of the surface coating layer includes a main resin, fillers, and melamine. Based on a total weight of the surface coating layer being 100 wt%, an existing amount of the main resin ranges from 45 wt% to 95 wt%, an existing amount of the fillers ranges from 0.1 wt% to 30 wt%, and an existing amount of the melamine ranges from 0.01 wt% to 25 wt%. The main resin includes a polyurethane resin or a polyester resin.

In certain embodiments, a total thickness of the polyester film for embossing ranges from 8 µm to 350 µm. The surface coating layer is coated on the base layer. A thickness of the surface coating layer ranges from 0.05 µm to 24 µm.

In certain embodiments, the physically regenerated polyester resin is formed from physically regenerated polyester chips. The physically regenerated polyester chips include physically regenerated regular polyester chips. The physically regenerated regular polyester chips are polyester chips prepared through the physical reproduction process, and no functional additive is added during the physical reproduction process.

In certain embodiments, a concentration of cyclic oligomer in the physically regenerated polyester resin is lower than a concentration of cyclic oligomer in the chemically regenerated polyester resin.

In certain embodiments, based on a total weight of the polyester composition being 100 wt%, the polyester composition contains 1 wt% to 25 wt% of a biomass-derived material. A content of C14 among total carbon atoms in the polyester composition ranges from 0.2 wt% to 5 wt%.

In certain embodiments, based on a total weight of the polyester composition being 100 wt%, the polyester composition contains 0.0003 wt% to 0.04 wt% of a metal catalyst. The metal catalyst is selected from the group consisting of antimony, germanium, titanium, and any combination thereof.

In certain embodiments, an average diameter of the fillers measured according to the standard ISO 13320 ranges from 10 nm to 8 µm.

In another aspect, the present disclosure provides a method for manufacturing a polyester film for embossing. The method for manufacturing a polyester film for embossing includes the following steps. A recycled polyester material is provided. A part of the recycled polyester material is physically reproduced to obtain the physically regenerated polyester chips. Another part of the recycled polyester material is chemically reproduced to obtain the chemically regenerated polyester chips. The physically regenerated polyester chips and the chemically regenerated polyester chips are mixed to form the base material that is without virgin polyester chips. A main component of each of the physically regenerated polyester resin and the chemically regenerated polyester resin is regenerated polyethylene terephthalate. Based on a total weight of the base layer being 100 wt%, a total usage amount of the physically regenerated polyester chips and the chemically regenerated polyester chips ranges from 50 wt% to 100 wt%. The base material is used to form a base layer having a main component of regenerated polyethylene terephthalate. The surface coating layer is formed onto the base layer. A polyester film for embossing is obtained.

In certain embodiments, the chemically regenerated polyester chips are prepared by the following steps. The recycled polyester material is depolymerized to obtain an oligomer mixture. The oligomer mixture is repolymerized to obtain the chemically regenerated polyester chips having a main component of regenerated polyethylene terephthalate.

In certain embodiments, the physically regenerated polyester chips are prepared by the following steps. The recycled polyester material is melted to obtain a melted mixture. The melted mixture is molded to obtain the physically regenerated polyester chips having a main component of regenerated polyethylene terephthalate.

Therefore, by virtue of "a main component forming the base layer being regenerated polyethylene terephthalate" and "the surface coating layer being disposed on the base layer, and a material forming the surface coating layer including a main resin, fillers, and melamine", an amount of the recycled polyester material in the polyester film for embossing can be increased.

### BRIEF DESCRIPTION OF THE DRAWINGS

The present disclosure will become more fully understood from the following detailed description and accompanying drawings.
FIG. 1 is a side schematic view of a polyester film for embossing according to a first embodiment of the present disclosure.
FIG. 2 is a schematic view showing a state of use of the polyester film for embossing according to the first embodiment of the present disclosure.
FIG. 3 is a side schematic view of a polyester film for embossing according to a second embodiment of the present disclosure.
FIG. 4 is a side schematic view of a polyester film for embossing according to a third embodiment of the present disclosure.
FIG. 5 is a flowchart describing a method for manufacturing the polyester film for embossing of the present disclosure.

### DETAILED DESCRIPTION OF THE EXEMPLARY EMBODIMENTS

### [First Embodiment]

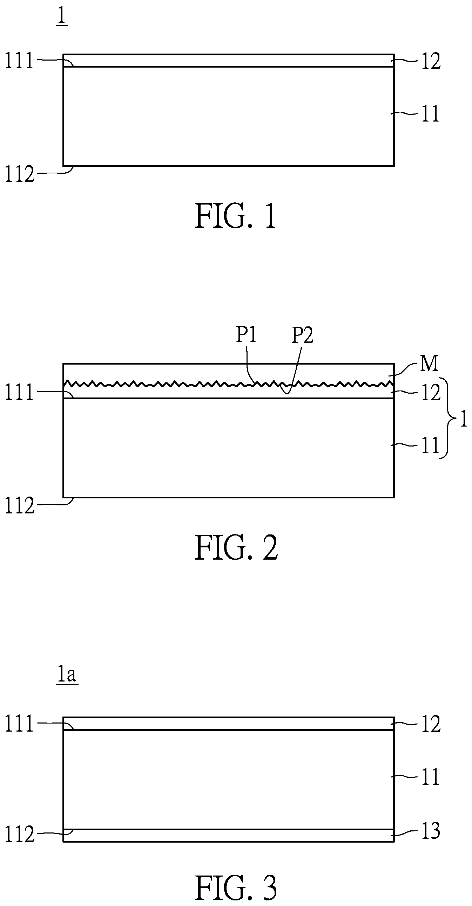

Referring to FIG. 1, a first embodiment of the present disclosure provides a polyester film for embossing 1. The polyester film for embossing 1 includes a base layer 11 and a surface coating layer 12.

The base layer 11 has a first surface 111 and a second surface 112 opposite to each other. The base layer 11 is flexible. The surface coating layer 12 is disposed on the first surface 111 of the base layer 11 by coating. In addition, the second surface 112 of the base layer 11 can undergo a corona treatment optionally. In the present embodiment, the surface coating layer 12 is coated on the base layer 11 by in-line coating, but it is not limited thereto. The surface coating layer 12 is an easy-to-press embossed pattern layer.

In the present embodiment, a thickness of the polyester film for embossing 1 ranges from 8 µm to 350 µm. A thickness of the surface coating layer 12 ranges from 0.05 µm to 24 µm.

Referring to FIG. 2, a three-dimensional embossed pattern P1 can be formed on a metal stamper M by laser engraving. Subsequently, the metal stamper M can be used to press against the surface coating layer 12 of the polyester film for embossing 1. If necessary, the metal stamper M can be heated to a predetermined temperature (such as 200°C), so that the surface coating layer 12 has another three-dimensional embossed pattern P2 that is inverse to the three-dimensional embossed pattern P1 in unevenness. However, these details are provided for exemplary purposes only and are not meant to limit the scope of the present disclosure.

The base layer 11 is formed from a polyester composition having a main component of regenerated polyethylene terephthalate. The polyester composition includes a physically regenerated polyester resin and a chemically regenerated polyester resin. A main component of each of the physically regenerated polyester resin and the chemically regenerated polyester resin is regenerated polyethylene terephthalate.

As for the polyester composition forming the base layer 11, based on a total weight of the polyester composition being 100 wt%, the polyester composition includes 50 wt% to 95 wt% of physically regenerated polyester resin, and 1 wt% to 40 wt% of chemically regenerated polyester resin. A total amount of the physically regenerated polyester resin and the chemically regenerated polyester resin ranges from 50 wt% to 100 wt%.

A material forming the surface coating layer 12 includes a main resin, fillers, and melamine. The main resin is acrylic resin, a polyurethane resin, or a polyester resin. The fillers include at least one of silicon dioxide, calcium carbonate, and aluminum oxide. A diameter of the fillers ranges from 10 nm to 8 µm.

Specifically, based on a total weight of the surface coating layer 12 being 100 wt%, an existing amount of the main resin ranges from 45 wt% to 95 wt%, an existing amount of the fillers ranges from 0.1 wt% to 30 wt%, and an existing amount of the melamine ranges from 0.01 wt% to 25 wt%.

In the present disclosure, the polyester composition forming the base layer 11 contains both of the physically regenerated polyester resin and the chemically regenerated polyester resin. By using both of the physically regenerated polyester resin and the chemically regenerated polyester resin, a proportion of the recycled polyester material used in the base layer 11 can be increased. In addition, even without being added with the virgin polyester chips, the polyester composition of the present disclosure will not have a problem of high impurity resulting from use of the physically regenerated polyester resin only.

Further, the aforementioned physically regenerated polyester resin is formed from one or many kinds of physically regenerated polyester chips. A main component of the physically regenerated polyester chips is regenerated polyethylene terephthalate. The aforementioned chemically regenerated polyester resin is formed from one or many kinds of chemically regenerated polyester chips. A main component of the chemically regenerated polyester chips is regenerated polyethylene terephthalate. The specific preparations of the physically regenerated polyester chips and the chemically regenerated polyester chips are illustrated later.

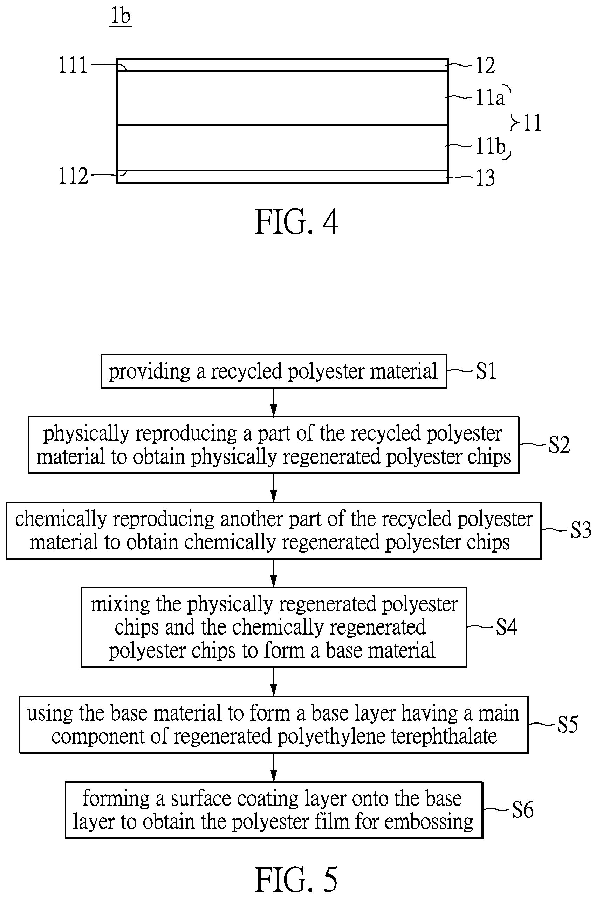

Referring to FIG. 5, a method for manufacturing the polyester film for embossing includes the following steps. A recycled polyester material is provided (step S1). A part of the recycled polyester material is physically reproduced to obtain physically regenerated polyester chips having a main component of regenerated polyethylene terephthalate (step S2). Another part of the recycled polyester material is chemically reproduced to obtain chemically regenerated polyester chips having a main component of regenerated polyethylene terephthalate (step S3). The physically regenerated polyester chips and the chemically regenerated polyester chips are mixed to form a base material (step S4). The base material is used to form a base layer having a main component of regenerated polyethylene terephthalate (step S5). A surface coating layer is formed onto the base layer to obtain the polyester film for embossing (step S6).

In step S1, the recycled polyester material is recycled bottle chips. A main material of the recycled bottle chips is polyester. Generally, polyester is formed by a polycondensation of diol units and diacid units. For recycled bottle chips, the diol units can be ethylene glycol derived from petrochemical sources or ethylene glycol derived from biomass. As for the polyester composition forming the base layer 11, based on the total weight of the polyester composition being 100 wt%, the polyester composition includes 1 wt% to 25 wt% of a biomass-derived material. In other words, a content of C14 among total carbon atoms in the polyester composition ranges from 0.2 wt% to 5 wt%.

The recycled polyester material can include isophthalic acid. Therefore, the polyester composition forming the base layer 11 may also contain isophthalic acid. Based on the total weight of the polyester composition being 100 wt%, the polyester composition contains 0.5 wt% to 5 wt% of isophthalic acid.

The recycled polyester material can include a metal catalyst. Therefore, the polyester composition forming the base layer 11 may also contain the metal catalyst. Based on the total weight of the polyester composition being 100 wt%, the polyester composition contains 0.0003 wt% to 0.04 wt% of the metal catalyst. The metal catalyst is selected from the group consisting of antimony, germanium, titanium, and any combination thereof.

In step S2, a physical reproduction process includes the following steps. The recycled polyester material (such as bottle chips) is cut into pieces, and then melted to form a melted mixture. The melted mixture is extruded by a single-screw extruder or a twin-screw extruder, and then granulated to obtain the physically regenerated polyester chips.

In the present embodiment, the physically regenerated polyester chips include physically regenerated regular polyester chips. The physically regenerated regular polyester chips are polyester chips prepared through the physical reproduction process, and no functional additive is added during the physical reproduction process. In the present embodiment, a main component forming the physically regenerated regular polyester chips is regenerated polyethylene terephthalate.

In addition, in the physical reproduction process, functional additives (such as a slipping agent, a coloring agent, or a matting agent) can be added in the melted mixture, so that physically regenerated slipping polyester chips, physically regenerated color polyester chips, and physically regenerated matting polyester chips can be obtained. It should be noted that, a main component of each of the physically regenerated slipping polyester chips, the physically regenerated color polyester chips, and the physically regenerated matting polyester chips is regenerated polyethylene terephathalate.

In step S3, a chemical reproduction process includes the following steps. The recycled polyester material (such as bottle chips) is cut into pieces and then put in a chemical depolymerization solution, so that molecules of polyester will be broken into polyester monomer (such as diol unit and diacid unit) and oligomers (such as cyclic oligomer), and then an oligomer mixture is formed. Subsequently, the oligomer mixture is isolated, purified, repolymerized, and then granulated to obtain the chemically regenerated polyester chips. In the present embodiment, a main component forming the chemically regenerated polyester chips is regenerated polyethylene terephthalate.

In the present embodiment, the chemical depolymerization solution can be water, methanol, ethanol, ethylene glycol, diethylene glycol or any combination thereof. However, the present embodiment is not limited thereto. For example, water is used for hydrolysis, and methanol, ethanol, ethylene glycol, diethylene glycol are used for alcoholysis. In a preferable embodiment, the chemical depolymerization solution includes ethylene glycol.

In the present embodiment, the chemically regenerated polyester chips include the chemically regenerated regular polyester chips and the chemically regenerated electrostatic pinning polyester chips. The term "chemically regenerated regular polyester chips" refers to polyester chips prepared by direct repolymerization, reproduction processand no functional additive is added in the oligomer mixture during the chemical reproduction process. In the present embodiment, a component forming the chemically regenerated regular polyester chips is regenerated polyethylene terephthalate. The term "chemically regenerated electrostatic pinning polyester chips" refers to those prepared by having electrostatic pinning additives added into the oligomer mixture and then repolymerized. In the present embodiment, the chemically regenerated electrostatic pinning polyester chips include regenerated polyethylene terephthalate and the electrostatic pinning additives.

It should be noted that, the term "electrostatic pinning" refers to a use of materials that increase electrical conductivity or decrease electrical resistivity. The term "electrostatic pinning additives" in the present disclosure refers to materials that increase electrical conductivity or decrease electrical resistivity.

The electrostatic pinning additives are metal salts. The metal salts can be sodium hydroxide, potassium hydroxide, or metal salts containing aliphatic carboxylic acid. In the metal salts containing aliphatic carboxylic acid, a carbon number of the aliphatic carboxylic acid ranges from 2 to 30. For instance, the aliphatic carboxylic acid (in the form of metal salts) contains monocarboxylic acid and dicarboxylic acid, such as acetic acid, palmitic acid, stearic acid, oleic acid or sebacic acid. In the present embodiment, the aliphatic carboxylic acid is preferably acetic acid. Further, a metal component of the metal salts can be, for example, alkali metal or alkaline earth metal. In other words, the metal salts can be, for example, lithium salts, sodium salts, potassium salts, manganese salts, zinc salts, calcium salts, magnesium salts, or aluminum salts. In the present embodiment, the metal salts are preferably manganese salts or lithium salts. The manganese salts can be magnesium acetate (Mg(CH3COOH)2), and the lithium salts can be lithium acetate (CH3COOLi). However, the present disclosure is not limited thereto.

In addition, in the chemical reproduction process, the functional additives mentioned above (such as slipping agent, coloring agent, and matting agent) can be added into the oligomer mixture. Accordingly, after repolymerizing the oligomer mixture, chemically regenerated slipping polyester chips, chemically regenerated color polyester chips, and chemically regenerated matting polyester chips can be prepared sequentially. It should be noted that, a main component of each of the chemically regenerated slipping polyester chips, the chemically regenerated color polyester chips, and the chemically regenerated matting polyester chips is regenerated polyethylene terephthalate.

In step S5, the base layer 11 is extruded and formed via an extruder.

In step S6, the surface coating layer 12 is formed from a surface coating paste. The surface coating paste includes the main resin, the fillers, and the melamin mentioned previously. The surface coating paste is disposed onto the base layer 11 by in-line coating so as to form the surface coating layer 12 onto the base layer 11. However, the way to form the surface coating layer 12 is not limited thereto.

### [Second Embodiment]

Referring to FIG. 3, a second embodiment of the present disclosure provides a polyester film for embossing 1a. The polyester film for embossing 1a includes a base layer 11, a surface coating layer 12, and another surface coating layer 13. The base layer 11 has a first surface 111 and a second surface 112 opposite to each other. The surface coating layer 12 is coated and formed on the first surface 111 of the base layer 11. The surface coating layer 13 is coated and formed on the second surface 112 of the base layer 11. The surface coating layer 12 and the surface coating layer 13 are each an easy-to-press embossed pattern layer. A three-dimensional embossed pattern (not shown in the figure) can be formed onto each of the surface coating layer 12 and the surface coating layer 13. The three-dimensional embossed pattern formed onto the surface coating layer 12 can be the same or different from the three-dimensional embossed pattern formed onto the surface coating layer 13.

A material of the base layer 11 and a material of the surface coating layer 12 in the second embodiment is similar to the material of the base layer 11 and the material of the surface coating layer 12 in the first embodiment. Therefore, the specific content is not repeated herein.

### [Third Embodiment]

Referring to FIG. 4, a third embodiment of the present disclosure provides a polyester film for embossing 1b. The polyester film for embossing 1b in the third embodiment is similar to the polyester film for embossing 1a in the second embodiment. The difference is that the base layer 11 in the third embodiment includes a first base layer 11a and a second base layer 11b stacked upon each other. A composition of the first base layer 11a can be the same or different from a composition of the second base layer 11b. For example, the first base layer 11a and the second base layer 11b can be formed from different polyesters, or the functional additives added in the first base layer 11a can be different from the functional additives added in the second base layer 11b.

### [Beneficial Effects of the Embodiments]

In conclusion, in the polyester film for embossing 1 and the method for manufacturing the same provided in the present disclosure, by virtue of "a main component formed the base layer 11 being regenerated polyethylene terephthalate" and "the surface coating layer 12 being disposed on the base layer 11 and a material forming the surface coating layer 12 including a main resin, fillers, and melamine", an amount of the recycled polyester material in the polyester film for embossing 1 can be increased.

## Claims

1. A polyester film for embossing (1) **characterized in that** the polyester film for embossing (1) is formed from a recycled polyester material, the polyester film for embossing (1) comprising:
a base layer (11) formed from a polyester composition, the polyester composition including regenerated polyethylene terephthalate and not including not regenerated polyester chips;
wherein the polyester composition includes a physically regenerated polyester resin and a chemically regenerated polyester resin;
wherein a main component of each of the physically regenerated polyester resin and the chemically regenerated polyester resin is regenerated polyethylene terephthalate;
wherein the physically regenerated polyester resin is formed from cutting, melting, extruding by a single-screw or twin-screw extruder, and granulating the recycled polyester material, and the chemically regenerated polyester resin is formed from cutting, depolymerizing to form an oligomer mixture including polyester monomers and oligomers, isolating and purifying the oligomer mixture, repolymerizing the oligomer mixture, and granulating the recycled polyester material; based on a total weight of the polyester composition being 100 wt%, a total content of a physically regenerated polyester resin and a chemically regenerated polyester resin ranges from 50 wt% to 100 wt%;
wherein, based on a total weight of the polyester composition being 100 wt%, a content of the physically regenerated polyester resin ranges from 50 wt% to 95 wt%, and a content of the chemically regenerated polyester resin ranges from 1 wt% to 40 wt%;
wherein the chemically regenerated polyester resin is formed from chemically regenerated polyester chips, and the chemically regenerated polyester chips include chemically regenerated electrostatic pinning polyester chips and chemically regenerated regular polyester chips;
wherein the chemically regenerated regular polyester chips are polyester chips prepared by direct repolymerization, reproduction process and no functional additive being added during the chemical reproduction process;
wherein the chemically regenerated electrostatic pinning polyester chips are polyester chips prepared by having electrostatic pinning additives being added into the oligomer mixture and then repolymerized;
wherein the physically regenerated polyester resin is formed from physically regenerated polyester chips, and the physically regenerated polyester chips include physically regenerated regular polyester chips;
wherein the physically regenerated regular polyester chips are polyester chips prepared through the physical reproduction process, and no functional additive is added during the physical reproduction process; and
a surface coating layer (12) disposed on at least one surface of the base layer (11), a material of the surface coating layer (12) including a main resin, fillers, and melamine, wherein, based on a total weight of the surface coating layer (12) being 100 wt%, an existing amount of the main resin ranges from 45 wt% to 95 wt%, an existing amount of the fillers ranges from 0.1 wt% to 30 wt%, and an existing amount of the melamine ranges from 0.01 wt% to 25 wt%; wherein the main resin includes a polyurethane resin or a polyester resin; wherein the fillers include at least one of silicon dioxide, calcium carbonate, and aluminum oxide.

2. The polyester film for embossing (1) according to claim 1, **characterized in that** a total thickness of the polyester film for embossing (1) ranges from 8 µm to 350 µm, the surface coating layer (12) is coated on the base layer (11), and a thickness of the surface coating layer (12) ranges from 0.05 µm to 24 µm.

3. The polyester film for embossing (1) according to claim 1, **characterized in that** a concentration of cyclic oligomer in the physically regenerated polyester resin is less than a concentration of cyclic oligomer in the chemically regenerated polyester resin.

4. The polyester film for embossing (1) according to claim 1, **characterized in that**, based on a total weight of the polyester composition is 100 wt%, the polyester composition contains 1 wt% to 25 wt% of a biomass-derived material, and a content of C14 among total carbon atoms in the polyester composition ranges from 0.2 wt% to 5 wt%.

5. The polyester film for embossing (1) according to claim 1, **characterized in that**, based on a total weight of the polyester composition is 100 wt%, the polyester composition contains 0.0003 wt% to 0.04 wt% of a metal catalyst, and the metal catalyst is selected from the group consisting of antimony, germanium, titanium, and any combination thereof.

6. A method for manufacturing a polyester film for embossing (1) as claimed in one of claims 1 to 5, **characterized in that** the method comprises:
providing a recycled polyester material;
physically reproducing a part of the recycled polyester material to obtain the physically regenerated polyester chips;
chemically reproducing another part of the recycled polyester material to obtain the chemically regenerated polyester chips;
mixing the physically regenerated polyester chips and the chemically regenerated polyester chips to form a base material;
using the base material to form the base layer (11) having a main component of regenerated polyethylene terephthalate; and
forming the surface coating layer (12) onto the base layer (11), so as to obtain the polyester film for embossing (1).

7. The method according to claim 6, **characterized in that** the chemically regenerated polyester chips are prepared by steps of:
depolymerizing the recycled polyester material to obtain an oligomer mixture; and
repolymerizing the oligomer mixture to obtain the chemically regenerated polyester chips having a main component of regenerated polyethylene terephthalate.

8. The method according to claim 6, **characterized in that** the physically regenerated polyester chips are prepared by steps of:
melting the recycled polyester material to obtain a melted mixture; and
molding the melted mixture to obtain the physically regenerated polyester chips having a main component of regenerated polyethylene terephthalate.

## Patentansprüche

1. Polyesterfolie zum Prägen (1), **dadurch gekennzeichnet, dass** die Polyesterfolie zum Prägen (1) aus einem recycelten Polyestermaterial gebildet ist, wobei die Polyesterfolie zum Prägen (1) aufweist:
eine Basisschicht (11), die aus einer Polyesterzusammensetzung gebildet ist, wobei die Polyesterzusammensetzung regeneriertes Polyethylenterephthalat aufweist und keine nicht-regenerierten Polyesterchips aufweist;
wobei die Polyesterzusammensetzung ein physikalisch-regeneriertes Polyesterharz und ein chemisch-regeneriertes Polyesterharz aufweist;
wobei eine Hauptkomponente jedes der physikalisch-regenerierten Polyesterharze und der chemisch-regenerierten Polyesterharze regeneriertes Polyethylenterephthalat ist;
wobei das physikalisch-regenerierte Polyesterharz gebildet wird durch Schneiden, Schmelzen, Extrudieren mit einem Ein- oder Doppelschneckenextruder und Granulieren des recycelten Polyestermaterials und das chemisch-regenerierte Polyesterharz gebildet wird durch Schneiden, Depolymerisieren, um ein Oligomergemisch zu bilden, das Polyestermonomere und -oligomere enthält, Isolieren und Reinigen des Oligomergemischs, Repolymerisieren des Oligomergemischs und Granulieren des recycelten Polyestermaterials; basierend auf einem Gesamtgewicht der Polyesterzusammensetzung von 100 Gew.-%, ist ein Gesamtgehalt an physikalisch-regeneriertem Polyesterharz und chemisch-regeneriertem Polyesterharz in einem Bereich von 50 Gew.-% bis 100 Gew.-%;
wobei, bezogen auf ein Gesamtgewicht der Polyesterzusammensetzung von 100 Gew.-%, ein Gehalt an physikalisch-regeneriertem Polyesterharz in einem Bereich von 50 Gew.-% bis 95 Gew.-% ist und ein Gehalt an chemisch-regeneriertem Polyesterharz in einem Bereich von 1 Gew.-% bis 40 Gew.-% ist;
wobei das chemisch-regenerierte Polyesterharz aus chemisch-regenerierten Polyesterchips gebildet ist und die chemisch-regenerierten Polyesterchips chemisch-regenerierte elektrostatisch fixierende Polyesterchips und chemisch-regenerierte reguläre Polyesterchips aufweisen;
wobei die chemisch-regenerierten regulären Polyesterchips Polyesterchips sind, die durch direkte Repolymerisation, Reproduktionsvorgang und ohne Zugabe von funktionellen Additiven während des chemischen Reproduktionsvorgangs hergestellt wurden;
wobei die chemisch-regenerierten elektrostatisch fixierenden Polyesterchips Polyesterchips sind, die hergestellt wurden, indem elektrostatisch fixierende Additive in das Oligomergemisch zugegeben und anschließend repolymerisiert wurden;
wobei das physikalisch-regenerierte Polyesterharz aus physikalisch-regenerierten Polyesterchips gebildet wird und die physikalisch-regenerierten Polyesterchips physikalisch-regenerierte reguläre Polyesterchips aufweisen;
wobei die physikalisch-regenerierten regulären Polyesterchips Polyesterchips sind, die durch den physikalischen Reproduktionsvorgang hergestellt wurden, und während des physikalischen Reproduktionsvorgangs keine funktionellen Additive zugegeben wurden; und
eine Flächenbeschichtungsschicht (12), die auf zumindest einer Fläche der Basisschicht (11) angeordnet ist, wobei ein Material der Flächenbeschichtungsschicht (12) ein Haupt-Harz, Füllstoffe und Melamin aufweist, wobei, bezogen auf ein Gesamtgewicht der Flächenbeschichtungsschicht (12) von 100 Gew.-%, eine vorhandene Menge des Haupt-Harzes in einem Bereich von 45 Gew.-% bis 95 Gew.-% liegt, eine vorhandene Menge der Füllstoffe in einem Bereich von 0,1 Gew.-% bis 30 Gew.-% liegt und eine vorhandene Menge des Melamins in einem Bereich von 0,01 Gew.-% bis 25 Gew.-% ist; wobei das Haupt-Harz ein Polyurethanharz oder ein Polyesterharz aufweist; wobei die Füllstoffe zumindest eines von Siliciumdioxid, Calciumcarbonat und Aluminiumoxid aufweisen.

2. Polyesterfolie zum Prägen (1) gemäß Anspruch 1, **dadurch gekennzeichnet, dass** eine Gesamtdicke der Polyesterfolie zum Prägen (1) in einem Bereich von 8 µm bis 350 µm ist, die Flächenbeschichtungsschicht (12) auf die Basisschicht (11) aufgetragen ist und eine Dicke der Flächenbeschichtungsschicht (12) in einem Bereich von 0,05 µm bis 24 µm ist.

3. Polyesterfolie zum Prägen (1) gemäß Anspruch 1, **dadurch gekennzeichnet, dass** eine Konzentration an cyclischem Oligomer in dem physikalisch-regenerierten Polyesterharz geringer ist als eine Konzentration an cyclischem Oligomer in dem chemisch-regenerierten Polyesterharz.

4. Polyesterfolie zum Prägen (1) gemäß Anspruch 1, **dadurch gekennzeichnet, dass**, bezogen auf ein Gesamtgewicht der Polyesterzusammensetzung von 100 Gew.-%, die Polyesterzusammensetzung 1 Gew.-% bis 25 Gew.-% eines Biomasse-abgeleiteten Materials enthält und ein Gehalt an C14 an den gesamten Kohlenstoffatomen in der Polyesterzusammensetzung in einem Bereich von 0,2 Gew.-% bis 5 Gew.-% ist.

5. Polyesterfolie zum Prägen (1) gemäß Anspruch 1, **dadurch gekennzeichnet, dass**, bezogen auf ein Gesamtgewicht der Polyesterzusammensetzung von 100 Gew.-%, die Polyesterzusammensetzung 0,0003 Gew.-% bis 0,04 Gew.-% eines Metallkatalysators enthält und der Metallkatalysator ausgewählt ist aus der Gruppe bestehend aus Antimon, Germanium, Titan und irgendeiner Kombination davon.

6. Verfahren zum Herstellen einer Polyesterfolie zum Prägen (1) gemäß irgendeinem der Ansprüche 1 bis 5, **dadurch gekennzeichnet, dass** das Verfahren aufweist:
Bereitstellen eines recycelten Polyestermaterials;
physikalisches Reproduzieren eines Teils des recycelten Polyestermaterials, um die physikalisch-regenerierten Polyesterchips zu erhalten;
chemisches Reproduzieren eines weiteren Teils des recycelten Polyestermaterials, um chemisch-regenerierte Polyesterchips zu erhalten;
Mischen der physikalisch-regenerierten Polyesterchips und der chemisch-regenerierten Polyesterchips, um ein Basismaterial zu bilden;
Verwenden des Basismaterials, um die Basisschicht (11) zu bilden, die eine Hauptkomponente aus regeneriertem Polyethylenterephthalat hat; und
Bilden der Flächenbeschichtungsschicht (12) auf der Basisschicht (11), um die Polyesterfolie zum Prägen (1) zu erhalten.

7. Verfahren gemäß Anspruch 6, **dadurch gekennzeichnet, dass** die chemisch-regenerierten Polyesterchips hergestellt werden durch Schritte von:
Depolymerisieren des recycelten Polyestermaterials, um ein Oligomergemisch zu erhalten; und
Repolymerisieren des Oligomergemischs, um die chemisch-regenerierten Polyesterchips zu erhalten, die eine Hauptkomponente von regeneriertem Polyethylenterephthalat haben.

8. Verfahren gemäß Anspruch 6, **dadurch gekennzeichnet, dass** die physikalisch-regenerierten Polyesterchips hergestellt werden durch Schritte von:
Schmelzen des recycelten Polyestermaterials, um eine geschmolzene Mischung zu erhalten; und
Formen der geschmolzenen Mischung, um die physikalisch-regenerierten Polyesterchips zu erhalten, die eine Hauptkomponente aus regeneriertem Polyethylenterephthalat haben.

## Revendications

1. Film polyester pour gaufrage (1) **caractérisé en ce que** le film polyester pour gaufrage (1) est formé à partir d'un matériau polyester recyclé, le film polyester pour gaufrage (1) comprenant :
une couche de base (11) formée à partir d'une composition de polyester, la composition de polyester comprenant du polyéthylène téréphtalate régénéré et ne comprenant pas de copeaux de polyester non régénérés ;
dans lequel la composition de polyester comprend une résine de polyester régénérée physiquement et une résine de polyester régénérée chimiquement ;
dans lequel un composant principal de chacune de la résine de polyester régénérée physiquement et de la résine de polyester régénérée chimiquement est du polyéthylène téréphtalate régénéré ;
dans lequel la résine polyester régénérée physiquement est formée par découpe, fusion, extrusion par une extrudeuse à vis unique ou à double vis, et granulation du matériau polyester recyclé, et la résine polyester régénérée chimiquement est formée par découpe, dépolymérisation pour former un mélange d'oligomères comprenant des monomères et des oligomères de polyester, isolation et purification du mélange d'oligomères, repolymérisation du mélange d'oligomères, et granulation du matériau polyester recyclé ; sur la base d'un poids total de la composition de polyester étant de 100 % en poids, une teneur totale en résine polyester régénérée physiquement et en résine polyester régénérée chimiquement varie de 50 % en poids à 100 % en poids ;
dans lequel, sur la base d'un poids total de la composition de polyester étant de 100 % en poids, une teneur en résine polyester régénérée physiquement varie de 50 % en poids à 95 % en poids, et une teneur en résine polyester régénérée chimiquement varie de 1 % en poids à 40 % en poids ;
dans lequel la résine polyester régénérée chimiquement est formée à partir de copeaux de polyester régénérés chimiquement, et les copeaux de polyester régénérés chimiquement comprennent des copeaux de polyester à fixation électrostatique régénérés chimiquement et des copeaux de polyester réguliers régénérés chimiquement ;
dans lequel les copeaux de polyester réguliers régénérés chimiquement sont des copeaux de polyester préparés par repolymérisation directe, par un procédé de reproduction et sans ajout d'additif fonctionnel pendant le procédé de reproduction chimique ;
dans lequel les copeaux de polyester à fixation électrostatique régénérés chimiquement sont des copeaux de polyester préparés en ajoutant des additifs de fixation électrostatique dans le mélange d'oligomères, puis en repolymérisant ;
dans lequel la résine polyester régénérée physiquement est formée à partir de copeaux de polyester régénérés physiquement, et les copeaux de polyester régénérés physiquement comprennent des copeaux de polyester réguliers régénérés physiquement ;
dans lequel les copeaux de polyester réguliers régénérés physiquement sont des copeaux de polyester préparés par le procédé de reproduction physique, et aucun additif fonctionnel n'est ajouté pendant le procédé de reproduction physique ; et
une couche de revêtement de surface (12) disposée sur au moins une surface de la couche de base (11), un matériau de la couche de revêtement de surface (12) comprenant une résine principale, des charges et de la mélamine, dans lequel, sur la base d'un poids total de la couche de revêtement de surface (12) étant de 100 % en poids, une quantité existante de la résine principale varie de 45 % en poids à 95 % en poids, une quantité existante des charges varie de 0,1 % en poids à 30 % en poids, et une quantité existante de la mélamine varie de 0,01 % en poids à 25 % en poids ; dans lequel la résine principale comprend une résine polyuréthane ou une résine polyester ; dans lequel les charges comprennent au moins l'un parmi le dioxyde de silicium, le carbonate de calcium et l'oxyde d'aluminium.

2. Film polyester pour gaufrage (1) selon la revendication 1, **caractérisé en ce qu'**une épaisseur totale du film polyester pour gaufrage (1) varie de 8 µm à 350 µm, la couche de revêtement de surface (12) est appliquée sur la couche de base (11) et une épaisseur de la couche de revêtement de surface (12) varie de 0,05 µm à 24 µm.

3. Film polyester pour gaufrage (1) selon la revendication 1, **caractérisé en ce qu'**une concentration en oligomère cyclique dans la résine polyester régénérée physiquement est inférieure à une concentration en oligomère cyclique dans la résine polyester régénérée chimiquement.

4. Film polyester pour gaufrage (1) selon la revendication 1, **caractérisé en ce que**, sur la base d'un poids total de la composition de polyester de 100 % en poids, la composition de polyester contient 1 % en poids à 25 % en poids d'un matériau dérivé de la biomasse, et une teneur en C14 parmi les atomes de carbone totaux dans la composition de polyester varie de 0,2 % en poids à 5 % en poids.

5. Film polyester pour gaufrage (1) selon la revendication 1, **caractérisé en ce que**, sur la base d'un poids total de la composition de polyester de 100 % en poids, la composition de polyester contient 0,0003 % en poids à 0,04 % en poids d'un catalyseur métallique, et le catalyseur métallique est choisi dans le groupe constitué par l'antimoine, le germanium, le titane et toute combinaison de ceux-ci.

6. Procédé de fabrication d'un film polyester pour gaufrage (1) selon l'une quelconque des revendications 1 à 5, **caractérisé en ce que** le procédé comprend :
la fourniture d'un matériau polyester recyclé ;
la reproduction physique d'une partie du matériau polyester recyclé pour obtenir les copeaux de polyester régénérés physiquement ;
la reproduction chimique d'une autre partie du matériau polyester recyclé pour obtenir les copeaux de polyester régénérés chimiquement ;
le mélange des copeaux de polyester régénérés physiquement et des copeaux de polyester régénérés chimiquement pour former un matériau de base ;
l'utilisation du matériau de base pour former la couche de base (11) ayant un composant principal de polyéthylène téréphtalate régénéré ; et
la formation de la couche de revêtement de surface (12) sur la couche de base (11), de manière à obtenir le film polyester pour gaufrage (1).

7. Procédé selon la revendication 6, **caractérisé en ce que** les copeaux de polyester régénérés chimiquement sont préparées par les étapes consistant à :
dépolymériser le matériau polyester recyclé pour obtenir un mélange d'oligomères ; et
repolymériser le mélange d'oligomères pour obtenir les copeaux de polyester régénérés chimiquement ayant un composant principal de polyéthylène téréphtalate régénéré.

8. Procédé selon la revendication 6, **caractérisé en ce que** les copeaux de polyester régénérés physiquement sont préparés par les étapes consistant à :
faire fondre le matériau polyester recyclé pour obtenir un mélange fondu ; et
mouler le mélange fondu pour obtenir les copeaux de polyester régénérés physiquement ayant un composant principal de polyéthylène téréphtalate régénéré.
